# EUROPEAN PATENT SPECIFICATION

(11) **EP 3 414 186 B1**
(45) Date of publication and mention of the grant of the patent: **09.10.2019**
(21) Application number: 17704237.1
(22) Date of filing: 08.02.2017
(51) Int. Cl.: B65D 85/804

(54) **BEVERAGE CAPSULE AND METHOD FOR PREPARING A BEVERAGE**
GETRÄNKEKAPSEL UND VERFAHREN ZUR HERSTELLUNG EINES GETRÄNKES
CAPSULE DE BOISSON ET METHODE DE PREPARATION DE BOISSONS

(30) Priority: 09.02.2016 EP 16154926
(43) Date of publication of application: 19.12.2018
(73) Proprietor: Société des Produits Nestlé S.A., 1800 Vevey (CH)
(72) Inventor: HEYDEL, Christophe Sébastien Paul, 2025 Chez-Le-Bart (CH)
(86) International application number: PCT/EP2017/052793
(87) International publication number: WO 2017/137460

(56) References cited:
- WO-A1-2007/114685
- WO-A1-2011/154690
- WO-A1-2012/121597
- WO-A1-2014/037339
- WO-A1-2014/102701
- WO-A1-2014/102702

## Description

### Field of the invention

The present invention concerns a beverage capsule for a beverage-preparation apparatus, as well as a method for preparing a beverage using such a capsule.

### Background of the invention

Single-serving beverage preparation machines are well known in the food industry and consumer goods domain. Such machines allow a consumer to prepare on command a single serving of a beverage such as drip coffee, espresso coffee, tea, hot chocolate drink, or even liquid foodstuffs such as soup or infant formula.

Most beverage preparation machines for in-home use operate according to a system in which beverage ingredients are provided in single-serving portions in individual containers, in particular in the form of a rigid or semi-rigid capsule. Such capsules are ordinarily hermetically sealed, so as to maintain the freshness and quality of the beverage ingredient within the capsule until use, as described for example in WO 2014/102701 A1.

To prepare a serving of a beverage, the capsule is first inserted into a beverage-preparation apparatus ("beverage machine") adapted to receive it. The beverage machine comprises a means for heating a volume of water and conducting it into the beverage capsule, wherein the heated water combines with the beverage ingredient to make a beverage.

The water may be injected at an elevated pressure (for e.g. espresso coffee capsules), or simply channelled into the capsule at atmospheric pressure (for *e.g.* drip coffee). Where the capsule is provided in a hermetically-sealed form, the beverage machine may advantageously be provided with a hollow injection needle, which is used to both break the hermetic seal of the capsule and to inject the heated water to produce the beverage.

Once prepared, the beverage is dispensed from an outlet of the capsule into a waiting container for consumption. To maintain the hermetic seal of the capsule, the outlet of the capsule is maintained in a sealed state until the beverage preparation process is begun, at which point the seal is broken and the outlet opened to allow the beverage to flow from the capsule.

After the beverage has been prepared and dispensed, a small amount of liquid may remain in the beverage capsule. This remnant liquid is likely to drip from the capsule, in particular once the capsule is removed from the beverage machine for disposal. Such dripping may soil the hands, clothes, etc. of the user and degrade generally the cleanliness and convenience of operation of the beverage preparation system.

Such dripping and remnant fluid problems are particularly acute where soluble beverage ingredients are used, as opposed to infusion ingredients where the remnant fluid is generally retained in the residual beverage ingredients (such as is the case with used coffee grounds and tea leaves).

Attempts have been made to resolve these difficulties. For instance, the beverage capsule may comprise a valve disposed on the outlet, which when the water injected into the capsule, and re-closes once the beverage preparation is complete. A capsule so configured will indeed reduce or prevent dripping, but with increased complexity and cost relative to containers which do not comprise such valves. Moreover, such valves are often configured to open under the pressure of the injected water, and are thus incompatible with beverage machines which simply conduct the water into the capsule under ambient pressure.

There is thus a need to provide a beverage capsule which resolves the above-mentioned disadvantages.

### Summary of the invention

To this end, the invention is directed towards a beverage capsule for a beverage-preparation apparatus, comprising a substantially cup-shaped capsule body having a first end and a second end, and defining a cavity; an outlet disposed in said second end in communication with said cavity; an injection membrane disposed upon said first end so as to close said cavity; and a quantity of a beverage ingredient disposed in said cavity.

According to a first aspect, the beverage capsule further comprises an elongate member extending from said second end into said cavity; and a channel extending through said elongate member from an extremity of said elongate member opposite said second end, said cavity being in fluid communication with said outlet solely through said channel.

A beverage capsule so configured is advantageous in that the elongate member so configured prevents dripping of the beverage from the capsule once the injection of water has ceased.

More specifically, the only fluid communication between the cavity wherein the injected water mixes with the beverage ingredient and the orifice of the elongate member is set at the extremity opposite the second end, the liquid injected into the capsule body to create the beverage must fill the cavity to the point where it "overflows" into the orifice, subsequently flowing through the channel and the outlet to be dispensed into a waiting container for consumption.

Thus, once the beverage machine ceases to inject water into the capsule, no more water will overflow into the channel. Dripping from the capsule is thereby prevented, as the residual liquid is retained within the capsule.

The use of the elongate member also promotes the even mixing and dissolution of the beverage ingredients, in particular at the low pressures used for the preparation of beverages from soluble ingredients. This yields a higher-quality beverage which is more consistent from one capsule to another.

In a possible embodiment, the extremity of the elongate member opposite said second end is crenelated or notched about at least part of the periphery thereof.

Such crenulations and/or notches will cause the beverage to flow into the channel and issue from the outlet when it has reached a level within the capsule that is less than the height of the elongate member, and continue to flow until the level of the beverage has dropped below the bottom of the crenulations and/or notches.

In this way, the behaviour of the liquid in the capsule is controlled with a greater degree of flexibility and accuracy; in particular its behaviour within the capsule as the injected water mixes with the beverage ingredient.

In a preferred embodiment, the extremity of the elongate member opposite the second end is disposed proximate to said injection membrane, such that when said injection membrane is deflected into the cavity said injection membrane bears upon said extremity of said elongate member.

This is advantageous in that the proximity of the elongate member to the injection membrane will offer a degree of resistance against the deflection of the injection membrane when pressed. In this way accidental breaches of the injection membrane are avoided.

In a preferred embodiment, the elongate member is mobile between a first, retracted position and a second, extended position wherein an outlet membrane disposed upon and enclosing the outlet is ruptured by said elongate member.

This is advantageous in that the elongate member is employed to rupture the outlet membrane, obviating the need for the user to remove this membrane him/herself or to otherwise manipulate the capsule. Such a configuration also eliminates the need to establish an elevated pressure within the beverage capsule so as to cause the outlet membrane to rupture, a configuration which may not be possible or desirable in low-pressure beverage machines.

Moreover, the use of the elongate member to effectuate the opening of the capsule outlet is advantageous in that it eliminates the need for any supplemental structure in the capsule receptacle of the beverage machine for piercing or otherwise opening the beverage capsule.

In this manner, the outlet membrane can be ruptured without requiring the elongate member to be manipulated directly or the beverage capsule opened (beyond that which is otherwise necessary to inject the water for the preparation of the beverage.

Also, it should be noted that this is particularly advantageous when the elongate member is configured such that its extremity opposite the second end of the beverage capsule is disposed proximate to the injection membrane.

Specifically, in such a capsule the mobile elongate member may be displaced simply by pushing on its end through the injection membrane. This may be accomplished e.g. by a structure provided in the capsule receptacle of the beverage machine, or by the user pressing on the injection membrane at a designated location and pushing the elongate member into the second, extended position.

Still more advantageous is a configuration in which the elongate member is provided with at least one crenulation and/or notch as described above, in that the elongate member may be made very long so as to minimize deflection, while the notch/crenulation(s) are configured to maintain a volume of beverage in the capsule that is less than, and possibly significantly less than, the entire volume of the cavity. A capsule so configured is therefore both flexible of configuration and reliable in use.

Most preferably, the elongate member is biased into the first, retracted position.

This is advantageous in that the elongate member can be configured to naturally return to the first, retracted position at the completion of the injection of the liquid, raising the orifice(s) of the channel above the level of the beverage liquid that is retained in the capsule. This offers further resistance to dripping and spillage when the capsule is removed from the apparatus.

In a possible embodiment, the elongate member is substantially cylindrical.

Such a member will maximize the strength of the elongate member relative to its volume, thereby minimizing the amount of material needed for its fabrication and, by extension, the additional cost and weight incurred in its implementation.

In a possible embodiment, the elongate member is a solid of revolution about a longitudinal axis of the beverage capsule, said elongate member having a substantially "M"-shaped cross-section in a plane parallel to said longitudinal axis, an orifice being disposed in an apex of said elongate member proximate to said outlet.

An elongate member so configured is particularly advantageous in that the W-shaped cross-section will give it a great deal of resistance to compression in its longitudinal direction, while at the same time allowing for a very large channel to be provided for a high maximum flow rate through the capsule.

In a possible embodiment, the elongate member is attached to the capsule body by a living hinge.

A capsule so configured is provided with a mobile elongate member in a simple and economical manner. Moreover, the living hinge has the advantage of being water- and air-tight, thereby enabling the user to both articulate the elongate member and create a seal between it and the capsule body with a single, simple structure.

In another possible embodiment, the capsule body and the elongate member are formed by co-injection moulding of at least two different plastic materials such that said capsule body and elongate member comprise at least three superimposed layers, a middle layer thereof forming an oxygen barrier.

Fabrication by co-injection permits the elongate member and the capsule body to be fabricated from different materials without losing the cost and simplicity of injection moulding. In particular, the provision of a layer serving as an oxygen barrier is particularly advantageous in that it will prevent the infiltration of oxygen into the cavity and subsequent spoilage or degradation of the beverage ingredients.

Moreover, placing the layers in a superimposed arrangement optimizes the use of the layers' different characteristics. For instance, the inner layer, which is in contact with the beverage ingredient, may be made from a material that is especially resistant to heat and water. Likewise, the outer layer may be provided in a material that that provides structural strength and is resistant to manipulation, protecting the inner layer(s). In this way, the qualities of the beverage capsule are optimized for each particular application.

In still another possible embodiment, the elongate member is formed integrally with the capsule body.

The resulting beverage capsule is fabricated with a minimum of manufacturing steps, reducing its cost.

Alternatively, the capsule body and the elongate member are formed separately and subsequently assembled together.

In this way, more complex forms for both the capsule body and the elongate member may be realized than by fabricating the components together as one unit.

According to a second aspect, the invention is directed towards a method for preparing a beverage, comprising the steps of providing a beverage capsule as described above; injecting a volume of water into the cavity of the beverage capsule to create a beverage; and dispensing said beverage through the channel of the elongate member and the outlet.

In this way, the advantages of the beverage capsule described above are realized in the act of producing a single-serving portion of the beverage.

In a possible embodiment, the method further comprises an opening step after the providing step, wherein the elongate member is displaced from the first, retracted position into the second, extended position so as to rupture the outlet membrane.

In this way, the outlet membrane is opened and the capsule prepared to dispense the beverage with a minimum of manipulation by the user, and without the necessity of a
Preferably, the opening step comprises exerting a force on the injection membrane such that it is displaced into contact with the extremity of the elongate member, said force being consequently exerted on said elongate member.

This is advantageous in that the elongate member is displaced into the second, extended position, and the outlet membrane consequently ruptured, without having to open the capsule or manipulate directly the elongate member.

In this way, the cleanliness of the capsule is maintained at a high level and the simplicity of its operation is maximized.

In particular, this may be accomplished by a complementary structure of a capsule receptacle of a beverage-preparation apparatus in which the beverage capsule is disposed.

In this way, the opening of the capsule, *i.e.* the piercing of the injection membrane by the injection needle and the rupture of the outlet membrane, is accomplished in a single, controlled step when the capsule is disposed in the beverage machine. The use of the capsule is thereby simplified and its advantages more consistently realized.

### Brief description of the drawings

Additional features and advantages of the present invention are described in, and will be apparent from, the description of the presently preferred embodiments which are set out below with reference to the drawings in which:
**Figure 1** is a cross-section view of a beverage capsule according to an embodiment of the invention in an initial, sealed state;
**Figure 2** is a cross-section view of the beverage capsule of Figure 1 during the preparation of a beverage; and
**Figure 3** is a cross-section view of the beverage capsule of Figure 1 after the preparation of a beverage.

### Detailed description of the invention

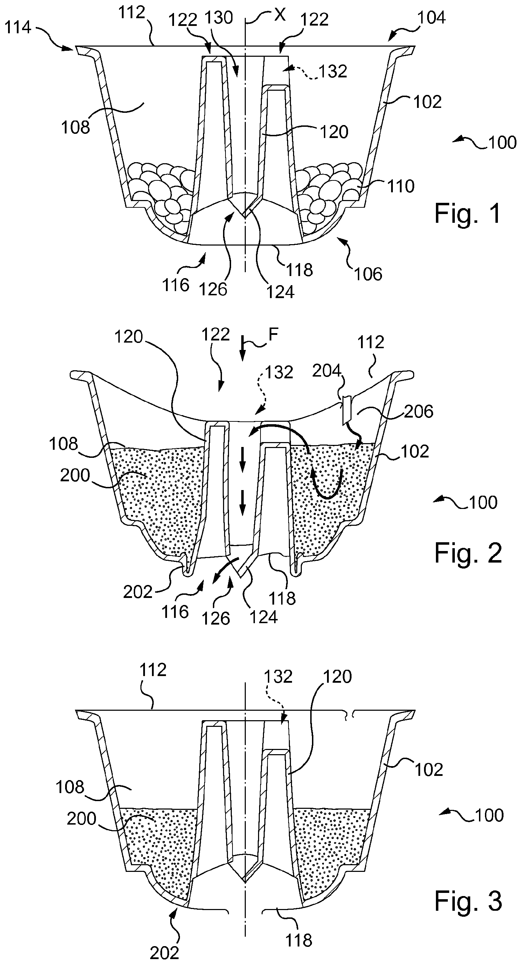

An embodiment of the invention is illustrated in Figure 1, in the form of a beverage capsule 100, depicted in cross-section.

The beverage capsule 100 comprises a capsule body 102, which has a first end 104 and a second end 106. As can be seen in Figure 1, the capsule body 102 is substantially cup-shaped, such that it defines within it a cavity 108, into which is provided a dose of a beverage ingredient 110.

The beverage ingredient 110 is a single portion of at least one substance that, when mixed with an appropriate volume of water, will produce a beverage. This may include substances that produce a beverage by infusion, for instance ground coffee or tea leaves. However, in this embodiment the beverage ingredient 110 is a soluble, e.g. freeze-dried coffee and powdered milk.

The first end 104 of the beverage capsule 100 is provided an enclosure, in the form of an injection membrane 112 which extends across the first end 104 and seals to a rim 114. The injection membrane 112 is a thin sheet of a flexible and resilient material, or possibly a lamination of several materials, which forms a barrier to the infiltration of air, light, and moisture into the beverage capsule 100.

At the second end 106, there is provided an outlet 116, which itself is sealed with an outlet membrane 118. Similar to the injection membrane 112, the outlet membrane 118 is a thin sheet of a flexible material which is sealed to the outlet 116 along the periphery thereof.

Thus, the beverage capsule 100 is hermetically sealed until the injection membrane 112 and the outlet membrane 118 are ruptured during the preparation of a beverage.

The beverage capsule 100 is further provided with an elongate member 120. The elongate member 120 extends from the second end 106 of the beverage capsule 100, into the cavity 108 to a height proximate the injection membrane 112.

There are numerous different methods that may be employed to fabricate the capsule body 102. Injection moulding, and in particular co-injection moulding, are preferred for this embodiment, as it produces the complex form of the elongate member 120 quickly and efficiently. However, in other embodiments it may be envisioned to fabricate the capsule body and the elongate member separately and then bond them together in an assembly step.

Co-injection is particularly advantageous, in that it can be used to fabricate the capsule body 102 and other parts of the beverage capsule 100 in a laminated or otherwise built-up structure, with different materials being used for each of its layers and/or component structures. This allows the materials used for each layer to be chosen so as to maximize the attributes of each while minimizing their drawbacks.

For instance, a three-layered capsule body 102 may be envisioned. The inner layer may be fabricated from a material which is resistant to heat and water infiltration, so as to better manage the injection of water during the preparation of a beverage. An outer layer of the capsule body 102 may be fabricated from a tough, resilient plastic, which gives the beverage capsule 100 structural resistance and rigidity. And a middle layer may optimally be made of an oxygen-impermeable material, which forms an oxygen barrier that prevents the infiltration of oxygen into the beverage capsule and prevents degradation and/or spoilage of the beverage ingredients therein.

Of course, other embodiments may envisage different configurations, wherein the number, composition, and other attributes of the co-injected layers may vary according to the aspects of the application in which the beverage capsule is to be used.

The capsule body 102 is, in this embodiment, fabricated from a thermoplastic material. More generally speaking, however, in most cases it may be envisioned to fabricate the beverage capsule from food-grade thermoplastics such as polypropylene (PP), Ethylene Vinyl Alcohol (EVOH), Poly-ethylene Terephthalate (PET), and other such polymers or combinations of polymers. Aluminium capsule bodies (or component portions thereof) may also be employed in certain embodiments.

Also, combinations of materials may be considered as particularly advantageous, in that certain features of the beverage capsule (for instance a hinge) may be fabricated with a material more adapted to the function of that feature than for the beverage capsule generally.

To this end, it may also be desirable to fabricate the components of the beverage capsule from one material, and then coat that material e.g. with another material to achieve certain performance characteristics.

For instance, in the beverage capsule 100, a silicon oxide vapour barrier may be deposited on the inside of the capsule body 102, to prevent infiltration of water vapour and oxygen into the cavity 108 and dissipation of flavour-bearing compounds from the beverage ingredient 110.

It will therefore be understood that the exact configuration, composition, and mode of fabrication of the beverage capsule may vary considerably from the exemplary embodiment depicted here, according to the beverage contained therein, the conditions (e.g. water temperature and injection pressure) of its preparation, and the configuration of the beverage machine in which said capsule is intended to be used.

Returning to the embodiment of Figure 1, the elongate member 120 is a substantially-cylindrical structure, formed by the revolution of a substantially W-shaped cross-section about the axis X of the beverage capsule 100. The elongate member 120 extends from the outlet 116 along the periphery thereof to an extremity 122 proximate to the injection membrane 112. The elongate member 120 then extends downwards, forming a lower apex 124 proximate to the outlet membrane 118.

At the lower apex 124 there is provided an orifice 126, which constitutes a part of a channel 130 which extends from the outlet 116 to the extremity 122. Thus, the only path of fluid communication between the cavity 108 and the outlet 118 is through the channel 130.

There is also provided, over a portion of the extremity 122 a localized reduction in the height of the elongate member, in this embodiment in the form of a crenulation 132. The crenulation 132 is, in this embodiment, a simple square notch in the elongate member 120, though of course other forms, for instance as V-notches or scalloped edges, might be equally envisioned. The effect of this crenulation will be discussed in further detail with respect to Figures 2 and 3.

Of course, it will be readily recognized that the form of the elongate member, the channel, the beverage capsule and its cavity, and other such physical attributes may vary. In particular, the elongate member may be provided as *e.g.* a substantially solid prismatic, cylindrical, or frusto-conical structure, rather than the thin, folded wall of the elongate member 120 depicted in Figure 1.

Turning now to Figure 2, the beverage capsule 100 is depicted during the injection of water in a process for preparing a beverage 200.

In the process for preparing the beverage 200, the outlet membrane 118 must be opened, so as to allow the beverage 200 to flow out of the outlet 116 of the beverage capsule 100.

To accomplish this, the elongate member 120 is displaced relative to the capsule body 102. A force F is applied to the injection membrane 112, causing it to deflect into the cavity 108. The injection membrane 112 deflects into the cavity 108 until it comes into contact with the extremity 122 of the elongate member 120.

At this point, the force F is applied to the extremity 122, thereby causing the elongate member 120 to be displaced into the second, extended position depicted here. The lower apex 124 of the elongate member 120 consequently pierces the outlet membrane 118, thereby opening the outlet 116.

A number of different ways may be employed to make the elongate member mobile with respect to the rest of the capsule body. In the present embodiment, there is provided a living hinge 202 along the periphery of the outlet 16, where the elongate member 120 extends therefrom, in the form of a localised reduction in the thickness of the capsule body 102. Such a hinge is desirable in that it allows the moulding of the beverage capsule 100 in a single piece, while maintaining a sealed relationship between the elongate member 120 and the capsule body 102.

In alternative embodiments, this motion may be made possible by a sliding joint, or even a crushable or frangible portion of the capsule body which is deformed upon the application of the force F.

Moreover, the force F may be applied to the beverage capsule in a number of different ways, depending on the structure of the capsule and of the beverage machine for which it is intended. For instance, there may be a complementary structure disposed in the beverage machine, such as a pressure plate, which applies the force F when the capsule is loaded. Alternatively, the force F may simply be exerted manually by the user prior to loading the capsule.

Once the outlet 116 has been opened, the beverage 200 is prepared by the injection of heated water. To accomplish this, the injection membrane 112 has been pierced by a hollow injection needle 204, which introduces a volume of heated water 206 into the cavity 108. The heated water 206 mixes with the beverage ingredient to create the beverage 200.

As the heated water 206 is injected, the beverage 200 will overflow through the crenulation 132, flowing down the channel 130 and through the orifice 126 out the outlet 116. The mixing of the beverage 200 is facilitated by the swirling of the water 206 in the cavity 108 and, in this embodiment, the off-centre positioning of the injection needle 204.

Once the injection has been completed and the desired volume of beverage dispensed, the capsule is expended and can be disposed of. An expended beverage capsule 100 is depicted in Figure 3; the injection needle has been removed, and the ruptured injection membrane 112 and outlet membrane 118 remain.

The elongate member 120 is biased into a first, retracted position, illustrated here and in Figure 1. It will be noted that, in Figure 2, the elongate member, under the force F, was displaced into the second, extended position. Here, in Figure 3, the force F has been released and the elongate member 120 has reverted to the first, retracted position. In this embodiment reversion is caused by the resilience of the capsule body 102, in particular the configuration of the living hinges 202 and the elastic properties of the material from which the capsule body 102 is fabricated.

It will be recalled from the discussion of Figure 2 that the level of the beverage 200 within the beverage capsule 100 is the same as the level of the crenulation 132 when the elongate member 120 is put into the second, extended position by the force F. However, as the elongate member 120 has returned to the first, retracted position, the crenulation 132 has risen above the level of the beverage 200 which remains in the cavity 108. As a result, the used beverage capsule 100 is made less likely to drip or spill during handling, such as when being removed from the beverage machine for disposal.

It will be recalled that the crenulation 132 may be provided in a number of different forms, depending on the particularities of the invention, and in particular the type of beverage ingredient provided in the beverage capsule 100. The person of ordinary skill in the art will be readily able to adapt the crenulation (or crenulations, as the case may be) of the beverage capsule 100 according to these factors.

For instance, when a powdered beverage ingredient is used, some of the beverage ingredient may briefly float on the surface of the heated water 206; it is therefore desirable to shape the crenulation 132 so as to restrict the flow of the beverage 200 across it and thereby avoid passing undissolved beverage ingredient through the channel 130 of the of elongate member 120.

Of course, it will be recognized that the configuration of the beverage capsule may vary from that depicted in the embodiment of Figures 1-3, and thus many variations are possible without departing from the scope of the invention.

First, it will be recognized that the elongate member need not necessarily be mobile, e.g. where it is not necessary that the elongate member is used for opening an outlet membrane. For instance, there may be provided a beverage capsule where the outlet is left open and un-sealed, with the beverage capsule enclosed in a protective over-wrapper that maintains the freshness of the beverage ingredients.

Alternatively, there may indeed be provided a cover or seal on the beverage capsule outlet which is breached prior to the preparation of the beverage by other means, such as a manual pull-tab.

In any case, the provision of an elongate member according to the invention will give the desired anti-dripping effect, according to the principles discussed above.

Second, if the elongate member is mobile, it need not necessarily be biased so as to return to the first, retracted position. In fact, in certain embodiments the elongate member may be provided with a region configured for plastic deformation when the force F is applied. Where this is case, the elongate member will remain in the second, extended position, even after the force is removed and the capsule extracted for disposal.

Alternatively, it may be envisioned that the elongate member is not mobile at all; in either of these cases, the level of the beverage retained in the beverage capsule will be that of the crenulation(s) or notch(es) or, where there are no crenulations or notches provided, the level of the opening of the channel into the cavity of the beverage capsule.

In still other possible embodiments, the elongate member may return to an intermediate position, between the first, retracted position and the second, extended position, at the conclusion of beverage preparation.

## Claims

1. A beverage capsule (100) for a beverage-preparation apparatus, comprising:
- a substantially cup-shaped capsule body (102) having a first end (104) and a second end (106), and defining a cavity (108);
- an outlet (116) disposed in said second end (106) in communication with said cavity (108);
- an injection membrane (112) disposed upon said first end (104) so as to close said cavity (108); and
- a quantity of a beverage ingredient (110) disposed within said cavity (108);
**characterized in that** it further comprises an elongate member (120) extending from said second end (106) into said cavity (108); and a channel (130) extending through said elongate member (120) from an extremity (122) of said elongate member (120) opposite said second end (106), said cavity (108) being in fluid communication with said outlet (116) solely through said channel (130).

2. The beverage capsule (100) according to claim 1, wherein the extremity (122) of the elongate member (120) opposite said second end (106) is crenelated or notched about at least part of the periphery thereof.

3. The beverage capsule (100) according to any one of the preceding claims, wherein the extremity (122) of the elongate member (120) opposite the second end (16) is disposed proximate to said injection membrane (112), such that when said injection membrane (112) is deflected into the cavity (108) said injection membrane (112) bears upon said extremity (122) of said elongate member (120).

4. The beverage capsule (100) according to any one of the preceding claims, wherein the elongate member (120) is mobile between a first, retracted position and a second, extended position wherein an outlet membrane (118) disposed upon and enclosing the outlet (116) is ruptured by said elongate member (120).

5. The beverage capsule (100) according to claim 4, wherein the elongate member (120) is biased into the first, retracted position.

6. The beverage capsule (100) according to any one of the preceding claims, wherein the elongate member (120) is substantially cylindrical.

7. The beverage capsule (100) according to any one of the preceding claims, wherein the elongate member (120) is a solid of revolution about a longitudinal axis (X) of the beverage capsule (100), said elongate member (120) having a substantially W-shaped cross-section in a plane parallel to said longitudinal axis (X), an orifice (126) being disposed in an apex (124) of said elongate member (120) proximate to said outlet (116).

8. The beverage capsule (100) according to any one of the preceding claims, wherein the elongate member (120) is attached to the capsule body (102) by a living hinge (202).

9. The beverage capsule (100) according to any one of the preceding claims, wherein the capsule body (102) and the elongate member (120) are formed by co-injection moulding of at least two different plastic materials such that said capsule body (102) and elongate member (120) comprise at least three superimposed layers, a middle layer thereof forming an oxygen barrier.

10. The beverage capsule (100) according to any one of the preceding claims, wherein the elongate member (120) is formed integrally with the capsule body (102).

11. The beverage capsule according to any one of claims 1 to 9, wherein the capsule body and the elongate member are formed as separate components and subsequently assembled together.

12. A method for preparing a beverage (200), comprising the steps of:
- providing a beverage capsule (100) according to any one of the preceding claims;
- injecting a volume of water (206) into the cavity (108) of the beverage capsule (100) to create a beverage (200); and
- dispensing said beverage (200) through the channel (130) of the elongate member (120) and the outlet (116).

13. The method according to claim 12, further comprising an opening step after the providing step, wherein the elongate member (120) is displaced from the first, retracted position into the second, extended position so as to rupture the outlet membrane (118).

14. The method according to claim 13, wherein the opening step comprises exerting a force (F) on the injection membrane (112) such that it is displaced into contact with the extremity (122) of the elongate member (120), said force (F) being consequently exerted on said elongate member (120).

15. The method according to claim 14, wherein the injection membrane (112) is depressed by a complementary structure of a capsule receptacle of a beverage-preparation apparatus in which the beverage capsule (100) is disposed.

## Patentansprüche

1. Getränkekapsel (100) für eine Getränkezubereitungsvorrichtung, umfassend:
- einen im Wesentlichen becherförmigen Kapselkörper (102), der ein erstes Ende (104) und ein zweites Ende (106) aufweist und einen Hohlraum (108) definiert;
- einen in dem zweiten Ende (106) angeordneten Auslass (116), der mit dem Hohlraum (108) in Verbindung steht;
- eine Injektionsmembran (112), die an dem ersten Ende (104) angeordnet ist, um den Hohlraum (108) zu schließen; und
- eine Menge eines Getränkeinhaltsstoffs (110), die in dem Hohlraum (108) angeordnet ist;
**dadurch gekennzeichnet, dass** sie ferner ein längliches Element (120), das sich von dem zweiten Ende (106) in den Hohlraum (108) erstreckt; und einen Kanal (130) umfasst, der sich durch das längliche Element (120) von einer Extremität (122) des länglichen Elements (120) gegenüber dem zweiten Ende (106) erstreckt, wobei der Hohlraum (108) nur durch den Kanal (130) in Fluidverbindung mit dem Auslass (116) steht.

2. Getränkekapsel (100) nach Anspruch 1, wobei die Extremität (122) des länglichen Elements (120) gegenüber dem zweiten Ende (106) um mindestens einen Teil seines Umfangs kreneliert oder gekerbt ist.

3. Getränkekapsel (100) nach einem der vorhergehenden Ansprüche, wobei die Extremität (122) des länglichen Elements (120) gegenüber dem zweiten Ende (16) in der Nähe der Injektionsmembran (112) angeordnet ist, sodass, wenn die Injektionsmembran (112) in den Hohlraum (108) gebogen wird, die Injektionsmembran (112) auf der Extremität (122) des länglichen Elements (120) aufliegt.

4. Getränkekapsel (100) nach einem der vorhergehenden Ansprüche, wobei das längliche Element (120) zwischen einer ersten zurückgezogenen Position und einer zweiten ausgefahrenen Position beweglich ist, wobei eine Auslassmembran (118), die auf dem Auslass (116) angeordnet ist und diesen umschließt, durch das längliche Element (120) zerrissen wird.

5. Getränkekapsel (100) nach Anspruch 4, wobei das längliche Element (120) in die erste zurückgezogene Position vorgespannt ist.

6. Getränkekapsel (100) nach einem der vorhergehenden Ansprüche, wobei das längliche Element (120) im Wesentlichen zylindrisch ist.

7. Getränkekapsel (100) nach einem der vorhergehenden Ansprüche, wobei das längliche Element (120) ein Drehkörper um eine Längsachse (X) der Getränkekapsel (100) ist, wobei das längliche Element (120) einen im Wesentlichen W-förmigen Querschnitt in einer Ebene parallel zu der Längsachse (X) aufweist, wobei eine Öffnung (126) in einer Spitze (124) des länglichen Elements (120) in der Nähe des Auslasses (116) angeordnet ist.

8. Getränkekapsel (100) nach einem der vorhergehenden Ansprüche, wobei das längliche Element (120) durch ein bewegliches Gelenk (202) an dem Kapselkörper (102) befestigt ist.

9. Getränkekapsel (100) nach einem der vorhergehenden Ansprüche, wobei der Kapselkörper (102) und das längliche Element (120) durch Sandwich-Spritzgießen von mindestens zwei unterschiedlichen Kunststoffmaterialien gebildet sind, sodass der Kapselkörper (102) und das längliche Element (120) mindestens drei überlagerte Schichten umfassen, wovon eine mittlere Schicht eine Sauerstoffbarriere bildet.

10. Getränkekapsel (100) nach einem der vorhergehenden Ansprüche, wobei das längliche Element (120) einstückig mit dem Kapselkörper (102) gebildet ist.

11. Getränkekapsel nach einem der Ansprüche 1 bis 9, wobei der Kapselkörper und das längliche Element als separate Komponenten gebildet sind und anschließend zusammengebaut werden.

12. Verfahren zur Zubereitung eines Getränks (200), umfassend die Schritte:
- Bereitstellen einer Getränkekapsel (100) nach einem der vorhergehenden Ansprüche;
- Einspritzen eines Wasservolumens (206) in den Hohlraum (108) der Getränkekapsel (100), um ein Getränk (200) herzustellen; und
- Ausgeben des Getränks (200) durch den Kanal (130) des länglichen Elements (120) und den Auslass (116).

13. Verfahren nach Anspruch 12, ferner umfassend einen Öffnungsschritt nach dem Bereitstellungsschritt, wobei das längliche Element (120) von der ersten zurückgezogenen Position in die zweite ausgefahrene Position verschoben wird, um die Auslassmembran (118) zu zerreißen.

14. Verfahren nach Anspruch 13, wobei der Öffnungsschritt das Ausüben einer Kraft (F) auf die Injektionsmembran (112) umfasst, sodass sie in Kontakt mit der Extremität (122) des länglichen Elements (120) verschoben wird, wobei die Kraft (F) folglich auf das längliche Element (120) ausgeübt wird.

15. Verfahren nach Anspruch 14, wobei die Injektionsmembran (112) durch eine komplementäre Struktur einer Kapselaufnahme einer Getränkezubereitungsvorrichtung, in der die Getränkekapsel (100) angeordnet ist, nach unten gedrückt wird.

## Revendications

1. Capsule de boisson (100) pour un dispositif de préparation de boissons, comprenant :
- un corps de capsule sensiblement en forme de coupelle (102) ayant une première extrémité (104) et une seconde extrémité (106) et définissant une cavité (108) ;
- une sortie (116) disposée dans ladite seconde extrémité (106) en communication avec ladite cavité (108) ;
- une membrane d'injection (112) disposée sur ladite première extrémité (104) de façon à clore ladite cavité (108) ; et
- une quantité d'un ingrédient de boisson (110) disposé à l'intérieur de ladite cavité (108) ;
**caractérisée en ce qu'**elle comprend en outre un élément allongé (120) s'étendant de ladite seconde extrémité (106) dans ladite cavité (108) ; et un canal (130) s'étendant à travers ledit élément allongé (120) depuis une extrémité (122) dudit élément allongé (120) opposée à ladite seconde extrémité (106), ladite cavité (108) étant en communication fluidique avec ladite sortie (116) uniquement à travers ledit canal (130).

2. Capsule de boisson (100) selon la revendication 1, dans laquelle l'extrémité (122) de l'élément allongé (120) opposée à ladite seconde extrémité (106) est crénelée ou crantée autour d'au moins une partie de sa périphérie.

3. Capsule de boisson (100) selon l'une quelconque des revendications précédentes, dans laquelle l'extrémité (122) de l'élément allongé (120) opposée à la seconde extrémité (16) est disposée à proximité de ladite membrane d'injection (112), de sorte que lorsque ladite membrane d'injection (112) est déviée dans la cavité (108), ladite membrane d'injection (112) prend appui sur ladite extrémité (122) dudit élément allongé (120).

4. Capsule de boisson (100) selon l'une quelconque des revendications précédentes, dans laquelle l'élément allongé (120) est mobile entre une première position rétractée et une seconde position étendue dans laquelle une membrane de sortie (118) disposée sur et autour de la sortie (116) est rompue par ledit élément allongé (120).

5. Capsule de boisson (100) selon la revendication 4, dans laquelle l'élément allongé (120) est sollicité dans la première position rétractée.

6. Capsule de boisson (100) selon l'une quelconque des revendications précédentes, dans laquelle l'élément allongé (120) est sensiblement cylindrique.

7. Capsule de boisson (100) selon l'une quelconque des revendications précédentes, dans laquelle l'élément allongé (120) est un solide de révolution autour d'un axe longitudinal (X) de la capsule de boisson (100), ledit élément allongé (120) ayant une section transversale sensiblement en forme de W dans un plan parallèle audit axe longitudinal (X), un orifice (126) étant disposé dans un sommet (124) dudit élément allongé (120) à proximité de ladite sortie (116).

8. Capsule de boisson (100) selon l'une quelconque des revendications précédentes, dans laquelle l'élément allongé (120) est fixé au corps de capsule (102) par une charnière mobile (202).

9. Capsule de boisson (100) selon l'une quelconque des revendications précédentes, dans laquelle le corps de capsule (102) et l'élément allongé (120) sont formés par moulage par co-injection d'au moins deux matériaux plastiques différents de sorte que ledit corps de capsule (102) et l'élément allongé (120) comprennent au moins trois couches superposées, une couche médiane de ceux-ci formant une barrière à l'oxygène.

10. Capsule de boisson (100) selon l'une quelconque des revendications précédentes, dans laquelle l'élément allongé (120) est formé d'un seul tenant avec le corps de capsule (102).

11. Capsule de boisson selon l'une quelconque des revendications 1 à 9, dans laquelle le corps de capsule et l'élément allongé sont formés comme des composants distincts et ensuite assemblés ensemble.

12. Procédé de préparation d'une boisson (200), comprenant les étapes consistant à :
- fournir une capsule de boisson (100) selon l'une quelconque des revendications précédentes ;
- injecter un volume d'eau (206) dans la cavité (108) de la capsule de boisson (100) pour créer une boisson (200) ; et
- distribuer ladite boisson (200) à travers le canal (130) de l'élément allongé (120) et la sortie (116).

13. Procédé selon la revendication 12, comprenant en outre une étape d'ouverture après l'étape de fourniture, dans lequel l'élément allongé (120) est déplacé de la première position rétractée à la seconde position étendue de manière à rompre la membrane de sortie (118).

14. Procédé selon la revendication 13, dans lequel l'étape d'ouverture comprend l'application d'une force (F) sur la membrane d'injection (112) de sorte qu'elle se déplace en contact avec l'extrémité (122) de l'élément allongé (120), ladite force (F) étant par conséquent appliquée audit élément allongé (120).

15. Procédé selon la revendication 14, dans lequel la membrane d'injection (112) est enfoncée par une structure complémentaire d'un réceptacle à capsule d'un appareil de préparation de boissons dans lequel la capsule de boisson (100) est disposée.
